# EUROPEAN PATENT APPLICATION

(11) **EP 4 509 412 A1**
(43) Date of publication of application: **19.02.2025**
(21) Application number: 23823001.5
(22) Date of filing: 07.06.2023
(51) Int. Cl.: B64D 47/08, B64C 39/02

(54) **UNMANNED AERIAL VEHICLE**

(30) Priority: 13.06.2022 CN 202221474387 U
(71) Applicant: Arashi Vision Inc., Shenzhen, Guangdong 518000 (CN)
(72) Inventor: ZHANG, Guilin, Shenzhen, Guangdong 518000 (CN); GAO, Fei, Shenzhen, Guangdong 518000 (CN)
(74) Representative: Michalski Hüttermann & Partner Patentanwälte mbB
(86) International application number: PCT/CN2023/098871
(87) International publication number: WO 2023/241432

(57) **Abstract**

The present disclosure is applicable to the technical field of drones, providing a drone including a drone body and a lens assembly, the drone body including a fuselage, a first set of arms located on one side of the fuselage in the length direction and a second set of arms on the other side, the first set of arms being closer to the top of the fuselage relative to the second set of arms; the lens assembly including a first lens and a second lens, the first lens protruding out of the fuselage at the top end of the fuselage being provided so that the first set of arms is located outside the angle of view of the first lens; the second lens is provided protruding from the bottom end of the fuselage so that the second set of arms is located outside the angle of view of the second lens. The present disclosure provides a drone that effectively reduces the range in which the angles of view of the first lens and the second lens are blocked, and also reduces the range in which the lens protrudes out of the fuselage, and better protects the lens so that it is not easy to be bumped and worn.

## Description

### TECHNICAL OF FIELD

The present disclosure relates to the technical field of panoramic lenses for unmanned aerial vehicles/drones, and particularly relates to an unmanned aerial vehicle/a drone.

### BACKGROUND

For a drone having single fisheye lens, the shooting perspective is relatively limited. In order to realize panoramic imaging, multiple fisheye lenses are usually used. However, due to special characteristics of the structure of the drone body (the drone body is generally provided with four arms and multiple paddles), it is easy for the drone body to block or obstruct the angle of view of the lens, which affects the quality of panoramic imaging.

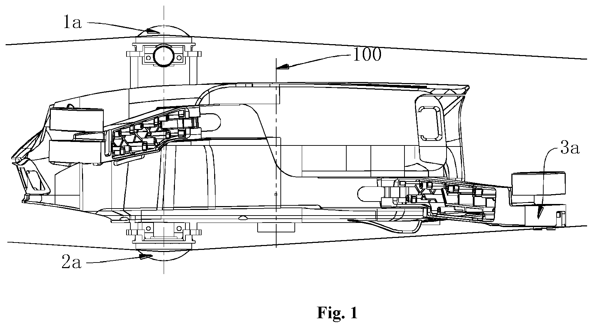

In the related art, as shown in FIG. 1, a drone equipped with fisheye lenses is usually set up with a top fisheye lens 1a and a bottom fisheye lens 2a coaxially and fixed in the vertical direction 100. As such, the angles of view of the two lenses are easily blocked by the paddles, the landing gears 3a, or the fuselage of the drone, which have a wide range of obstruction and affect the quality of shooting. In order to avoid the above obstruction, the lenses are generally highly elevated and moved away from the fuselage. However, this approach tends to sacrifice appearance. Furthermore, the highly elevated lens increases the air resistance of the drone in flight, and it is easy for the protruding lens to be bumped or worn out.

### SUMMARY

The purpose of the present disclosure is to overcome the deficiencies of the above mentioned prior art, and provide a drone that effectively reduces the range of the first lens and the second lens whose viewpoints are blocked, and also makes the lens protrude out of the range of the body, and better protects the lens so that it is not easy to bump and wear.

The technical solution of the present disclosure is a drone, comprising:

A done body, the drone body comprising a fuselage, a first set of arms disposed on one side of the fuselage in a lengthwise direction and a second set of arms disposed on the other side, the first set of arms being proximate to the top of the fuselage with respect to the second set of arms;

A lens assembly, the lens assembly comprising a first lens and a second lens, the first lens protruding and provided at the top of the fuselage so as to keep the first set of arms outside the angle of view of the first lens, and the second lens protruding and provided at the bottom of the fuselage so as to keep the second set of arms outside the angle of view of the second lens.

As a further improvement of the present technical solution, the fuselage has a longitudinal axis in the direction of the height of the fuselage, and the axis of the first lens or/and the axis of the second lens are inclined relative to the longitudinal axis, so as to allow the fuselage to be located outside of the angles of view of the first lens and the second lens.

As a further improvement of the present technical solution, the axis of the first lens and the axis of the second lens are set coaxially, and the axis of the first lens is set inclined with respect to the longitudinal axis in the direction from the first set of arms to the second set of arms.

As a further improvement of the present technical solution, the angle between the axis of the first lens or the axis of the second lens and the longitudinal axis is 2-10 degrees.

As a further improvement of the present technical solution, the axis of the first lens and the axis of the second lens are set at different axes, and the axis of the first lens is set at an inclination relative to the longitudinal axis in the direction from the first set of arms to the second set of arms.

As a further improvement of the present technical solution, the axis of the second lens is provided along the longitudinal axis direction.

As a further improvement of the present technical solution, the axis of the first lens and the axis of the second lens are set at different axes, and the axis of the second lens is set at an inclination relative to the longitudinal axis in the direction from the first set of arms to the second set of arms.

As a further improvement of the present technical solution, the axis of the first lens is provided along the longitudinal axis direction.

As a further improvement of the present technical solution, the fuselage has a longitudinal axis along the height direction of the drone body, the axis of the first lens, and the axis of the second lens are parallel to the longitudinal axis, and the first lens and the second lens are provided spaced apart along the planar direction of the fuselage, so as to allow the fuselage to be located outside of the angles of view of the first lens and the second lens.

As a further improvement of the present technical solution, the angle of view boundary of the first lens is tangent to the drone body; or/and, the angle of view boundary of the second lens is tangent to the done body.

The present disclosure provides a drone, the first set of arms being proximate to the top of the drone body with respect to the second set of arms; the fuselage being located outside the angles of view of the first lens and the second lens by providing a first lens and a second lens, the first lens being provided at the top of the fuselage and the second lens being provided at the bottom of the fuselage; the first lens protrudes from the top end of the body and the first lens is proximate to the first set of arms relative to the second lens, and the second lens protrudes from the bottom end of the body and the second lens is proximate to the second set of arms; and that by the first set of arms and the second set of arms not being disposed flush with one another and by varying the specific positions of the first lens and the second lens relative to the first set of arms and the second set of arms so as to cause the fuselage to be located outside the angles of view of the first lens and the second lens, so that the angles of view of the first lens and the second lens are not blocked, or the scope of blocking can be minimized, and the scope of the lens (the first lens and the second lens) protruding from the drone body (the fuselage) is reduced to protect the lens from being easily bumped and abraded.

### BRIEF DESCRIPTION OF THE DRAWINGS

In order to more clearly illustrate the technical solutions in the embodiments of the present disclosure, the accompanying drawings to be used in the embodiments will be briefly introduced below, and it will be obvious that the accompanying drawings in the following description are only some of the embodiments of the present disclosure, and that for the person of ordinary skill in the field, other accompanying drawings can be obtained based on these drawings, without giving creative labor.
FIG. 1 is a schematic diagram of a structure of a drone in the related art;
FIG. 2 is a schematic diagram of a structure of a drone provided by an embodiment of the present disclosure;
FIG. 3 is a schematic diagram of a structure of a drone provided by another embodiment of the present disclosure.

Symbols in the figure:
1a-top fisheye lens, 2a-bottom fisheye lens, 100-vertical direction;
1-first lens, 2-second lens, 3-landing gear, 4-first set of arms, 5-second set of arms, 6-fuselage, 200-longitudinal axis.

### DETAILED DESCRIPTION

In order to make the purpose, technical solution and advantages of the present disclosure more clearly understood, the present disclosure is described in further detail hereinafter in conjunction with the accompanying drawings and embodiments. It should be understood that the specific embodiments described herein are only for explaining the present disclosure and are not intended to limit the present disclosure.

It should be noted that the terms "provided," "fixed," and "connected" are to be understood in a broad sense, for example, either directly or indirectly through intermediary components or intermediary structures.

In addition, in the embodiments of the present disclosure, if there are terms indicating orientation or positional relationships such as "longitudinal", "transverse", "length", "width", "thickness", "up", "down", "front", "back", "left", "right", "vertical", "horizontal", "top", "bottom", "inside", and "outside", they are based on the orientation or positional relationships or the conventional placement state or usage state shown in the drawings, and are only for the convenience of describing the present disclosure and simplifying the description, and do not indicate or imply that the structure, feature, device or element referred to must have a specific orientation or positional relationship, nor must it be constructed and operated in a specific orientation, and therefore cannot be understood as a limitation in the present disclosure. In the description of the present disclosure, unless otherwise indicated, "plurality" means two or more.

Each specific technical feature and each embodiment described in the specific embodiments can be combined in any suitable way in case of no contradiction. For example, different embodiments can be formed by the combination of different specific technical features/embodiments, and in order to avoid unnecessary repetitions, the various possible ways of combining the specific technical features/embodiments in the present disclosure are not separately described.

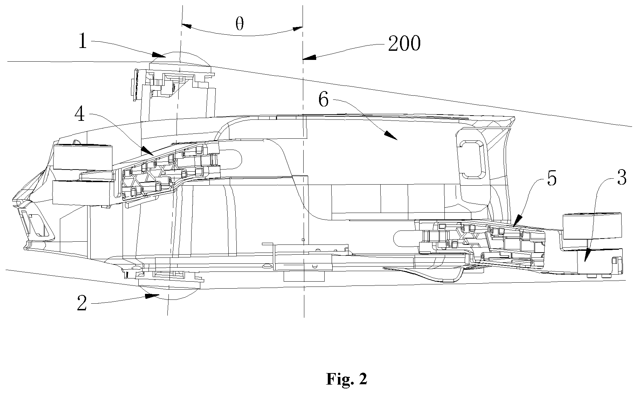

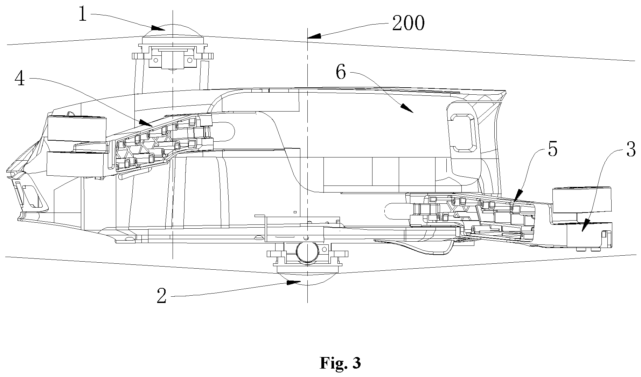

As shown in FIGS. 2 and 3, one embodiment of the present disclosure provides a drone comprising a drone body and a lens assembly, the drone body comprising a fuselage 6, a first set of arms 4 disposed at one end of the fuselage 6, and a second set of arms 5 disposed at the other end of the fuselage 6 in a lengthwise direction. The first set of arms 4 is closer to the top or upper end of the fuselage 6 with respect to the second set of arms 5. The first lens 1 protrudes from the upper end of the fuselage 6, and the first lens 1 is closer to the first set of arms 4 relative to the second lens 2. The second lens 2 protrudes from the bottom or lower end of the fuselage 6 and is closer to the second set of arms 5 relative to the first lens 1. The lens assembly includes a first lens 1 and a second lens 2, wherein the first lens 1 is arranged at the top of the drone body, and the second lens 2 is arranged at the bottom of the drone body, so that the drone body is located outside the angles of view of the two panoramic lenses. By means of the reasonable layout of the first set of arms 4 and the second set of arms 5, under the premise of ensuring a smooth and reliable flight, the angles of view of the first lens 1 and the second lens 2 are not to be blocked, or the scope of the panoramic lenses being blocked is minimized.

In one embodiment, the drone body has a longitudinal axis 200 along the height direction of the fuselage 6. When the fuselage flies horizontally or positioned horizontally relative to a horizontal plane, the longitudinal axis 200 is perpendicular to the horizontal plane. The axis of the first lens 1 or the axis of the second lens 2 is inclined relative to the longitudinal axis 200 so that the drone body is located outside the angles of view of the first lens 1 and the second lens 2. Alternatively, the axis of the first lens 1 and the axis of the second lens 2 are both inclined relative to the longitudinal axis 200 so that the drone body is located outside the angles of view of the first lens 1 and the second lens 2. In a drone provided by one embodiment of the present disclosure, by changing the relative positions and settings of the first lens 1 and the second lens 2 so that the drone body is located outside the angles of view of the first lens 1 and the second lens 2. Such configuration can effectively minimize the scope of the angles of view of the first lens 1 and the second lens 2 being blocked, if any. It also makes the extent of lenses (the first lens 1 and the second lens 2) protruding from the fuselage (the drone body) smaller, which can better protect the lenses so that they are not easy to be bumped and worn.

In one embodiment, as shown in FIG. 2, the first lens 1 and the second lens 2 are coaxially provided, and the axis of the first lens 1, and the axis of the second lens 2 are inclined relative to the longitudinal axis 200. The axis of the first lens 1 is provided inclined relative to the longitudinal axis 200 in the direction from the first set of arms 4 to the set of arms 5. The angle between the axis of the first lens 1 or the axis of the second lens 2 and the longitudinal axis 200 is 2 to 10 degrees or 4 to 8 degrees. In a specific application, the drone may comprise a connecting member or connector, one end of the connecting member is connected to the first lens 1, and the other end of the connecting member is connected to the second lens 2. Optionally, the connecting member may comprise a connecting shaft and a positioning member or positioner, the two ends of the connecting shaft are connected to the first lens 1 and the second lens 2, respectively; the positioning member disposed in the drone body is used to fix the connecting shaft. The positioning member may be a threaded structure, the threaded structure being used to abut against the connecting shaft. The drone body has a through hole through which the threaded structure can pass. In one embodiment, the connecting member is used to make the first lens 1 and the second lens 2 coaxial, and the inclination angle θ between the connecting shaft relative to the longitudinal axis 200 is fixed via the limiting effect of the positioning member. In one embodiment, the threaded structure is a bolt, the bolt passes through the through hole and against the connecting shaft, and the inclination angle θ is adjustable (in this embodiment, it is 3.2°) to effectively minimize or eliminate the extent of the angles of view of the first lens 1 and the second lens 2 being blocked, and it is convenient to make the adjustment.

In one embodiment, the axis of the first lens 1 and the axis of the second lens 2 are not coaxially arranged. The axis of the first lens 1 is set inclined with respect to the longitudinal axis 200 in the direction from the first set of arms 4 to the second set of arms 5. In one embodiment, the axis of the second lens 2 is provided in the direction of the longitudinal axis 200. Specifically, the axis of the first lens 1 is relatively inclined with respect to the longitudinal axis 200, and the inclination direction is the direction from the first set of arms 4 to the second set of arms 5. The axis of the second lens 2 is provided in the direction of the longitudinal axis 200; in another embodiment, the axis of the first lens 1 is relatively inclined with respect to the longitudinal axis 200, and the axis of the second lens 2 is relatively inclined with respect to the longitudinal axis 200; in specific applications, the adjustment can be made according to the actual needs so that the angles of view of the first lens 1 and the second lens 2 are not blocked or the scope of being blocked is minimized.

In one embodiment, the axis of the first lens 1 and the axis of the second lens 2 are not coaxially arranged, and the axis of the second lens 2 is set inclined with respect to the longitudinal axis 200 in the direction of from the first set of arms 4 to the second set of arms 5. The axis of the first lens 1 is provided in the direction of the longitudinal axis 200. In specific applications, adjustments can be made according to actual needs so that the angles of view of the first lens 1 and the second lens 2 are not blocked or the extent of being blocked is minimized.

In one embodiment, the drone body has a longitudinal axis 200 along the height direction of the fuselage 6, and it is to be understood that when the drone body flies or is placed horizontally relative to the horizontal plane, the longitudinal axis 200 is perpendicular to the horizontal plane. The axis of the first lens 1 and the axis of the second lens 2 are parallel to the longitudinal axis 200, and the first lens 1 and the second lens 2 are spaced apart along the planar direction of the drone body (i.e., perpendicular to the planar direction of the longitudinal axis 200) so that the drone body is located outside of the angles of view of the first lens 1 and the second lens 2. As shown in FIG. 3, the first lens 1 and the second lens 2 are spaced apart along a direction perpendicular to the longitudinal axis 200. It can be understood that the direction perpendicular to the longitudinal axis 200 is a length direction of the fuselage when the drone body is flying horizontally or placed horizontally relative to the horizontal plane. The axis of the first lens 1 and the axis of the second lens 2 are both parallel to the longitudinal axis 200. In specific applications, the spacing between the first lens 1 and the second lens 2 can be flexibly set to satisfy that the angles of view of the first lens 1 and the second lens 2 are not blocked or the scope of the angles of view being blocked is minimized.

In one embodiment, the drone body comprises a landing gear 3 that can be retracted, the landing gear 3 when retracted being located outside the angles of view of the first lens 1 and the second lens 2. Optionally, the retractable landing gear 3 also does not affect the shooting angle of view. In one embodiment, the drone body comprises paddles, the paddles are also located outside the angles of view of the first lens 1 and the second lens 2 so as to satisfy the need for more shooting scenes.

In one embodiment, a boundary of the angle of view of the first lens 1 is tangent to the drone body; or a boundary of the angle of view of the second lens 2 is tangent to the drone body. It is to be understood that the boundary of the angle of view of the first lens 1 refers to the boundary of the maximum angle of view of the first lens 1, and the boundary of the angle of view of the second lens 2 refers to the boundary of the maximum angle of view of the second lens 2; and, in this embodiment, by changing the relative position and setting of the first lens 1 and the second lens 2 in such a way so that the boundary of the maximum angle of view of the first lens 1 is tangent to the drone body and the boundary of the maximum angle of view of the second lens 2 is tangent to the drone body to obtain maximum angles of view without being obscured by the drone body.

An embodiment of the present disclosure provides a drone. For the drone, the first set of arms 4 is closer to the top of the fuselage than the second set of arms 5; By setting a first lens 1 and a second lens 2, the first lens 1 is set at the top of the drone body, and the second lens 2 is set at the bottom of the drone body, so that the drone body is located outside the angles of view of the two panoramic lenses (the first lens 1 and the second lens 2). The first lens 1 protrudes from the top or upper end of the fuselage, and the first lens 1 is closer to the first set of arms 4 relative to the second lens 2. The second lens 2 protrudes from the bottom or lower end of the fuselage, and the second lens 2 is closer to the second set of arms 5. By arranging the first set of arms 4 and the second set of arms 5 unevenly in the longitudinal direction and changing the specific positions of the first lens 1 and the second lens 2 relative to the first set of arms 4 and the second set of arms 5, the drone body is located outside the angles of view of the of the first lens 1 and the second lens 2, so that the angles of view of the first lens 1 and the second lens 2 are not blocked, or the extent of being blocked is minimized, and the extent of the lenses (the first lens 1 and the second lens 2) protruding from the drone body (fuselage) is reduced, thereby better protecting the lenses from being easily bumped and worn.

The above are some embodiments of the present disclosure, and are not intended to limit the present disclosure, and any modifications, equivalent replacements or improvements made within the spirit and principles of the disclosure shall be included in the scope of protection of the disclosure.

The above-described embodiments express only several embodiments of the present application, which are described in a more specific and detailed manner, but are not to be construed as a limitation of the scope of the patent of the present application. It should be pointed out that for a person of ordinary skill in the art, several modifications and improvements can be made without departing from the conception of the present application, which all fall within the scope of protection of the present application. Therefore, the scope of protection of this application shall be subject to the attached claims.

## Claims

1. A drone, comprising:
a drone body, the drone body comprising a fuselage, a first set of arms at one end of the fuselage in a lengthwise direction and a second set of arms at the other end of the fuselage in the lengthwise direction, the first set of arms being closer to a top of the fuselage relative to the second set of arms; and
a lens assembly, the lens assembly comprising a first lens and a second lens, the first lens protruding from the top of the fuselage so that the first set of arms is outside a angle of view of the first lens and the second lens protruding from a bottom of the fuselage so that the second set of arms is outside an angle of view of the second lens.

2. The drone according to claim 1, wherein the drone body has a longitudinal axis along a height direction of the fuselage, and an axis of the first lens or/and an axis of the second lens are relatively inclined to the longitudinal axis so that the drone body is located outside the angle of view of the first lens or/and the angle of view of the second lens.

3. The drone according to claim 2, wherein the axis of the first lens and the axis of the second lens are coaxially arranged and the axis of the first lens is inclined relative to the longitudinal axis in a direction from the first set of arms to the second set of arms.

4. The drone according to claim 3, wherein an angle between the axis of the first lens or the axis of the second lens and the longitudinal axis is 2-10 degrees.

5. The drone according to claim 2, wherein the axis of the first lens and the axis of the second lens are not coaxially arranged, and the axis of the first lens is inclined relative to the longitudinal axis in a direction from the first group of arms to the second group of arms.

6. The drone according to claim 5, wherein the axis of the second lens is provided along a direction of the longitudinal axis.

7. The drone according to claim 2, wherein the axis of the first lens and the axis of the second lens are not coaxially arranged, and the axis of the second lens is inclined relative to the longitudinal axis in a direction from the first group of arms to the second group of arms.

8. The drone according to claim 7, wherein the axis of the first lens is provided along a direction of the longitudinal axis.

9. The drone as claimed in claim 1, wherein the drone body has a longitudinal axis along a height direction of the fuselage, the axis of the first lens, the axis of the second lens are parallel to the longitudinal axis, and the first lens and the second lens are spaced apart along a planar direction of the drone body so that the drone body is outside the angle of view of the first lens and the angle of view of the second lens.

10. The drone as claimed in any one of claims 1 to 9, wherein a boundary of the angle of view of the first lens is tangent to the drone body or/and a boundary of the angle of view of the second lens is tangent to the drone body.
